# EUROPEAN PATENT SPECIFICATION

(11) **EP 2 873 319 B1**
(45) Date of publication and mention of the grant of the patent: **24.08.2016**
(21) Application number: 14193121.2
(22) Date of filing: 13.11.2014
(51) Int. Cl.: A01K 41/00, A01K 31/18, A01K 31/19

(54) **POULTRY HOUSE PROVIDED WITH AN EGG INCUBATOR DEVICE, AND METHOD OF INCUBATING EGGS IN THE POULTRY HOUSE**
HÜHNERSTAL MIT EINER VORRICHTUNG ZUM SCHLÜPFEN VON EIERN, UND VERFAHREN ZUM SCHLÜPFEN VON EIERN IN SOLCHEM STALL
ÉTABLE POUR VOLAILLE AVEC UN APPAREIL POUR COUVER DES OEUFS, ET PROCÉDÉ POUR COUVER DES OEUFS DANS UNE TEL ÉTABLE

(30) Priority: 13.11.2013 NL 2011799; 13.05.2014 NL 2012811
(43) Date of publication of application: 20.05.2015
(73) Proprietor: Van de Ven Beheer B.V., 5521 DZ Eersel (NL)
(72) Inventor: Van de Ven, Cornelis Antonius Wilhelmus, 5521 NB Eersel (NL)
(74) Representative: Verhees, Godefridus Josephus Maria

(56) References cited:
- WO-A1-02/34039
- GB-A- 191 303 860
- US-A- 1 384 084
- US-A- 1 626 394
- US-A- 2 612 863

## Description

### Field of the invention

The invention relates to a poultry house comprising a poultry house floor, a ceiling and/or roof, and an egg carrier for carrying the eggs during the incubation process, as well as first distance-to-floor setting means for retaining the egg carrier at a distance above the poultry house floor.

### State of the art

An egg incubator device that can be used in a poultry house is known from US2612863A. This known egg incubator device comprises a housing having a floor and upright walls, as well as an egg carrier for carrying the eggs during the incubation process, and distance-to-floor setting means for retaining the egg carrier at a distance above the floor of the housing, which distance-to-floor setting means comprises a suspension system by which the egg carrier is suspended from the walls of the housing, which egg incubator device further comprises first adjusting means by which the egg carrier can be suspended at various adjustable heights above the housing floor. This known incubator device is usually located in a separate space which is separated from the space in which the newly hatched chicks are raised. An animal-friendly way of raising the chicks is by raising them in poultry houses where the chicks can walk around on the poultry house floor and are not raised in cages. In that case the hatched chicks would have to be taken from the incubator device by hand and put in the poultry house.

In case the known incubator device would be installed in a poultry house, then the hatched chicks would have to be taken from the incubator device by hand and put on the poultry house floor because the.height of drop from the shelves to the poultry house floor is too large and after that the incubator device has to be removed from the poultry house because the presence of the incubator device hinders the normal use of the poultry house.

The eggs or egg trays can also be deposited directly on the floor, as proposed in document WO-A-02/34039. The newly hatched chicks can then immediately, or once they have climbed out of the egg tray, walk around in the poultry house in which also feeder arrangements have been placed, so that no manual labour is needed for this. However, it has turned out that if the eggs or egg trays are deposited directly on the poultry house floor, the percentage of hatched eggs is smaller than in the known incubator device.

### Summary of the invention

It is an object of the invention to provide a poultry house for raising the chicks of the type defined in the opening paragraph in which the eggs can be incubated and hatched and the percentage of hatched eggs is higher than when the eggs or egg trays are deposited directly on the poultry house floor. For this purpose the poultry house according to the invention is characterized in that the first distance-to-floor setting means comprising a suspension system by which the egg carrier is suspended from a ceiling or roof of the poultry house, which poultry house further comprises first adjusting means by which the egg carrier can be suspended at various adjustable heights above the poultry house floor, where in an incubation state the distance to the poultry house floor is such that the heat/cold radiation from the poultry house floor does not have adverse effects on the incubation of the eggs and/or development of the chicks and where in a hatching state the distance to the poultry house floor is such that the newly hatched chicks can drop or climb onto the poultry house floor or a receiving plate positioned above the floor without experiencing any bodily harm, where in the incubation state the distance to the poultry house floor is larger than in the hatching state. Said distance above the poultry house floor is dependent on the conditions in the poultry house, such as type of ventilation and heating (underfloor heating, radiation lamp) and is to be established in an empirical manner. Usually, a distance at which the height of drop is not too large and the chicks cannot be caught between the egg carrier and the poultry house floor is also a correct distance for achieving a high percentage of correctly hatched eggs. The distance must not be so small that the radiation of heat (in case of underfloor heating) or cold from the poultry house floor would cause the eggs to become too hot or too cold as a result of which the percentage of correctly hatched eggs would be adversely affected.

An embodiment of the poultry house according to the invention is characterized in that the poultry house further includes a receiving plate which is positioned at a distance below the egg carrier, this distance being such that when the egg carrier is positioned in the hatching state, newly hatched chicks can drop onto the receiving plate without experiencing any bodily harm, as well as second distance-to-floor setting means for retaining the receiving plate at a distance above the poultry house floor or at a distance below the egg carrier. The second distance-to-floor setting means may be arranged as a carrier present on the poultry house floor or cables or rods connected to the egg carrier. The optimal distance from the egg carrier to the poultry house floor with respect to the hatching of the eggs is often too large for the newly hatched chicks to drop from the egg carrier onto the poultry house floor. Yet for realising this optimal distance a receiving plate is provided between the egg carrier and the poultry house floor. This receiving plate at the same time blocks radiation heat or radiation cold coming from the poultry house floor. An even more important advantage of the receiving plate is that the newly hatched chicks can dry in secure and optimal climatic circumstances.

The receiving plate is preferably made of a material that rapidly adopts the ambient temperature, for example plastic.

A further embodiment of the poultry house according to the invention is characterized in that the poultry house comprises a railing or raised edge which is present along the periphery of the receiving plate. The function of this railing or raised edge is to keep the newly hatched chicks on the receiving plate for a certain period of dwell time. The height of this railing or raised edge is such that chicks that have just hatched, which cannot walk or can hardly do so, cannot roll/climb over the railing or raised edge, and chicks that are somewhat older and are capable indeed of walking, can climb over the railing or raised edge.

A still further embodiment of the poultry house according to the invention is characterized in that the incubator device comprises second adjusting means for adjusting the distance from the railing to the receiving plate. This creates the possibility of varying the dwell time of the hatched chicks on the receiving plate.

Preferably, cables are attached to the railing by which cables the railing can be suspended from the ceiling or roof or from the egg carrier, and the second adjusting means comprise a hoist system by which the cables can be pulled up or lowered.

The first distance-to-floor setting means comprise a suspension system by which the egg carrier can be suspended from a ceiling or roof of the poultry house. This suspension system preferably comprises further cables by which the egg carrier can be suspended from the ceiling or roof and the first adjusting means preferably comprise a further hoist system by which the further cables can be pulled up or lowered for adjusting the desired height of the egg carrier above the poultry house floor and/or for lifting and lowering the egg carrier over a larger distance. This achieves that the desired height to the poultry house floor can be adjusted in a rapid and simple manner and, as desired, the complete system can be pulled up for realising accessibility to the complete poultry house floor for example for the purpose of cleaning activities or for applying wood shavings and supplying supplemental chicken feed. It is also possible for the hoisting means to be used for bringing the egg carrier to the desired working height in a simple manner when egg trays are placed onto the egg carrier and, once the hatching has finished, when the empty egg trays are removed from the egg carrier.

An embodiment of the poultry house according to the invention is characterized in that the egg carrier is designed for carrying eggs accommodated in egg trays and comprises one or more pairs of parallel mutually equidistant support strips, as well as side guide profiles located above and beside these strips, between which profiles the egg trays fit with a slight clearance, where the support strips are located between adjoining rows of eggs in the egg trays underneath partitions located between the rows. As a result, the support does not cause any obstacle to the chicks that drop/jump through the openings in the egg tray onto the poultry house floor and the chance of chicks getting caught between the egg tray and the support is reduced considerably.

A further embodiment of the poultry house according to the invention is characterized in that the incubator device further includes transport means for further advancing the egg trays in an intermittent manner over the adjusting means each time over a moving distance that exceeds the length of the egg tray. Because of this, the egg trays retain their mutual distance, so that the clearance on all four sides is sufficiently large for the chicks to leave the egg tray on any of the four sides.

Preferably, the transport means comprise a rail having adjustable hooks accommodated therein. which have a mutual distance that equals the moving distance, which hooks allow of being turned away in one direction and of being locked against turning in another direction opposite to this.

A further embodiment of the poultry house according to the invention is characterized in that the poultry house comprises heating means and ventilation means, which heating means heat only the egg trays and their immediate environment while the remaining space in the poultry house can be kept at a lower temperature, so that energy is saved and still in a simple manner the correct incubation temperature can be maintained.

The invention further relates to a method of incubating eggs and raising chicks in a poultry house. With respect to the method, the invention is characterized in that one or more egg trays containing eggs are deposited at a first distance above the poultry house floor and, subsequently, the eggs are hatched after which the trays are lowered to a second distance above the poultry house floor, where the newly hatched chicks can land or climb without any bodily harm onto the poultry house floor or a receiving plate present above this floor, and afther all eggs are hatched the egg trays are risen and the chicks will be raised in the poultry house. Preferably, during the incubation process the egg trays are intermittently advanced in horizontal direction and are removed from the poultry house once the eggs have hatched.

### Brief description of the drawings

The invention will be further explained below while reference is made to an example of embodiment of the incubator device according to the invention represented in the appended drawings, in which:
Fig. 1 shows a perspective view of an embodiment of the incubator device according to the invention;
Fig. 2 shows a top view of the incubator device shown in Fig. 1;
Fig. 3 shows a front view of the incubator device shown in Fig. 1 having the egg tray in the incubation state;
Fig. 4 shows a front view of the incubator device shown in Fig. 1 having the egg tray in the hatching state;
Fig. 5 shows a detail of the support of an egg tray;
Fig. 6 shows a top view of the detail shown in Fig. 5;
Fig. 7 shows a detail of the support at an alternative location underneath the egg tray;
Fig. 8 shows a top view of the detail shown in Fig. 7;
Fig. 9 shows a detail of the support of the egg tray having the egg compartments in a honeycomb configuration;
Fig. 10 shows a top view of the detail shown in Fig. 9;
Fig. 11 shows a further embodiment of the incubator device equipped with a receiving plate underneath the egg trays, where the receiving plate is suspended from the egg carrier; and
Fig. 12 shows the incubator device shown in Fig. 11 where the receiving plate is supported by a frame present on the poultry house floor.

### Detailed description of the drawings

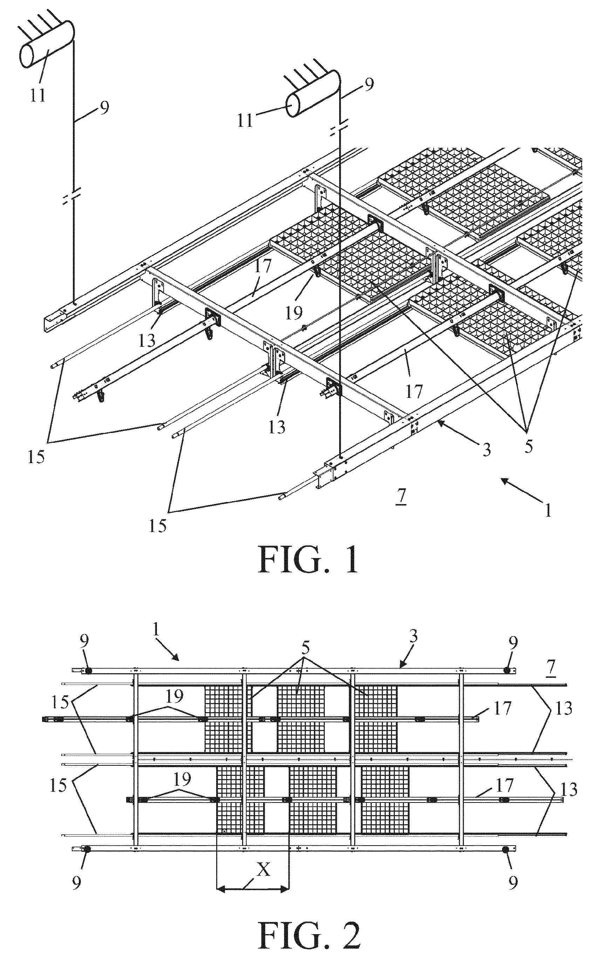

Figs. 1 and 2 show an embodiment of the incubator device according to the invention in a perspective view and top view respectively. The incubator device 1 comprises an egg carrier 3 for carrying egg trays 5 and adjusting means by which the egg carrier can be retained at a distance above the floor 7 of the poultry house. These adjusting means are formed by a suspension system which suspends the egg carrier from a ceiling or roof of the poultry house by means of cables 9. The cables can be pulled up or lowered via hoisting means which are formed by a hoist system 11.

The egg carrier 3 comprises a plurality of pairs of parallel mutually equidistant support strips 13, as well as side guide profiles 15 located above and beside them, between which guide profiles the egg trays fit with a slight clearance.

The incubator device further includes transport means which are capable of intermittently advancing the egg trays over the adjusting means each time over a moving distance X that is greater than the length of the egg tray (see Fig. 2). These transport means have a rail 17 accommodating hooks 19 movable therein at a mutual distance equal to the advancing distance. The hooks are rotatably connected to a rod movable in a forward and backward stroke in the rail, the hooks allowing of being turned away in one direction and of being locked against turning in a direction opposite to this, so that in the direction of transport the hooks in the forward stroke are pointing vertically downward and can advance the egg trays over the support strips and in the backward stroke turn to a horizontal position caused by the touching of the egg trays and are thus returned to the initial position over the egg trays.

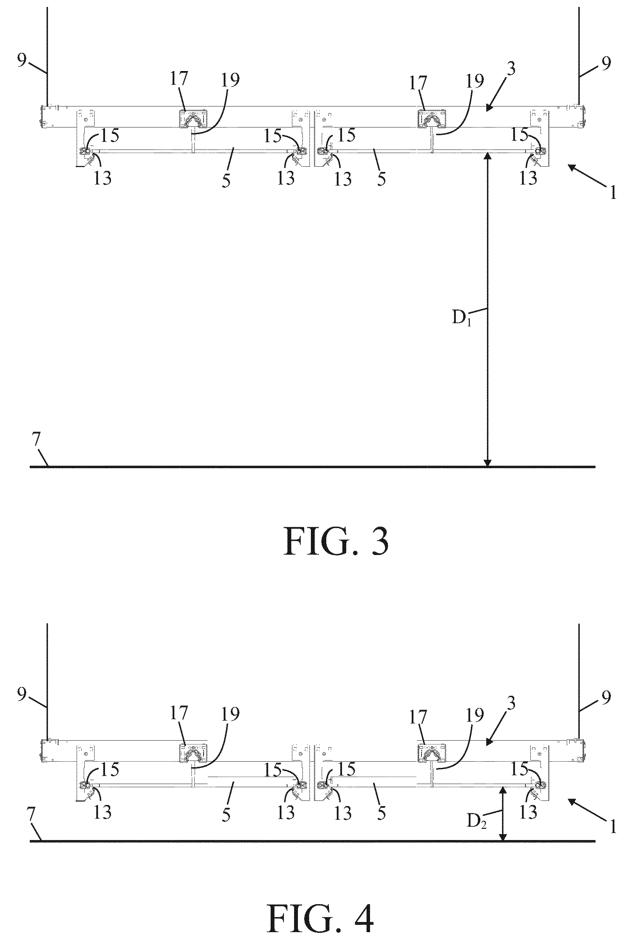

Figs. 3 and 4 show front views of the incubator device 1 having the egg carrier 3 in the incubation state and hatching state respectively. In the incubation state (Fig. 3) the egg trays 5 are located at a distance D₁ from the poultry house floor 7. At this distance the heat/cold radiation coming from the poultry house floor does not have an adverse effect on the hatching of the eggs and/or the development of the chicks. In the hatching state (Fig. 4) the egg trays 5 are located at a distance D₂ from the poultry house floor 7. At this distance the chicks can drop or climb onto the poultry house floor without any bodily harm. In the incubation state (Fig. 3) the distance D₁ from the egg trays to the poultry house floor exceeds the distance in the hatching state (Fig. 4) where this distance is D₂.

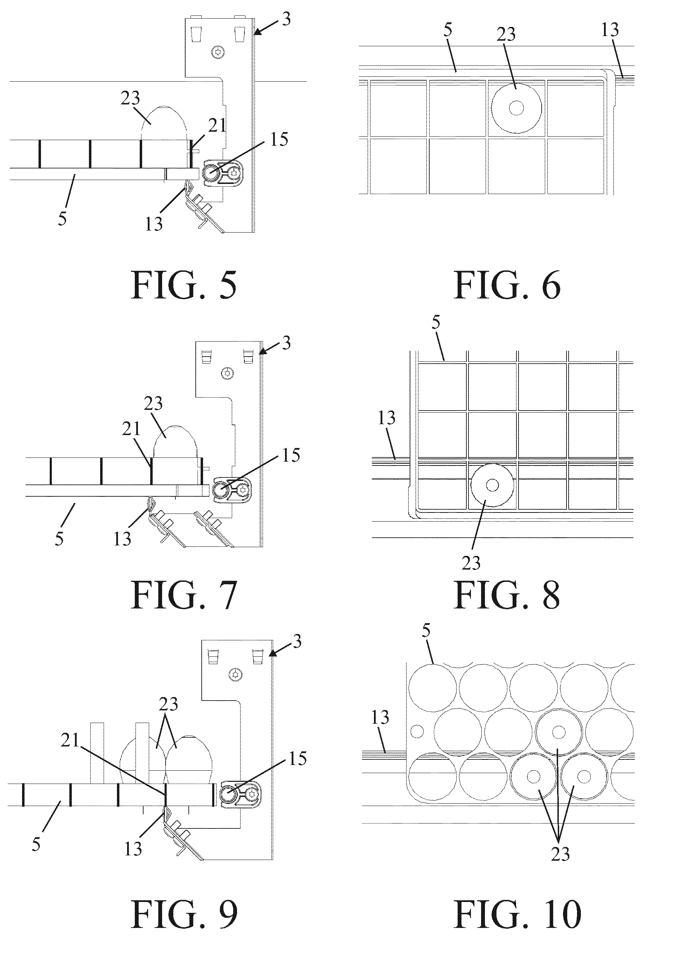

Figs. 5 and 6 show a detail of the support of an egg tray. The egg tray 5 comprises partitions 21 which form boundaries of compartments in which eggs 23 can be placed in upright position. The support strips 13 are located right underneath the outside partitions and thus do not form any obstacle to newly hatched chicks that drop onto the poultry house floor underneath through the openings between the partitions.

Figs. 7 and 8 show a detail of the support at an alternative location. Here the support strips 13 underneath the egg tray are located at places right underneath the partitions 21 that form the dividing walls between the compartments in which the eggs 23 are located. At these locations the support strips do not form any abstacle either to newly hatched chicks that drop onto the poultry house floor underneath through the openings between the partitions.

Finally, Figs. 9 and 10 show a detail of the support of an egg tray in which the egg compartments depicted in honeycomb configuration are present. The support strips 13 are shown here right underneath the partitions 21 which form zigzag-shaped dividing walls between the rows of eggs 23 in the egg trays. Also in this case the support strips do not form any obstacle either to the newly hatched chicks.

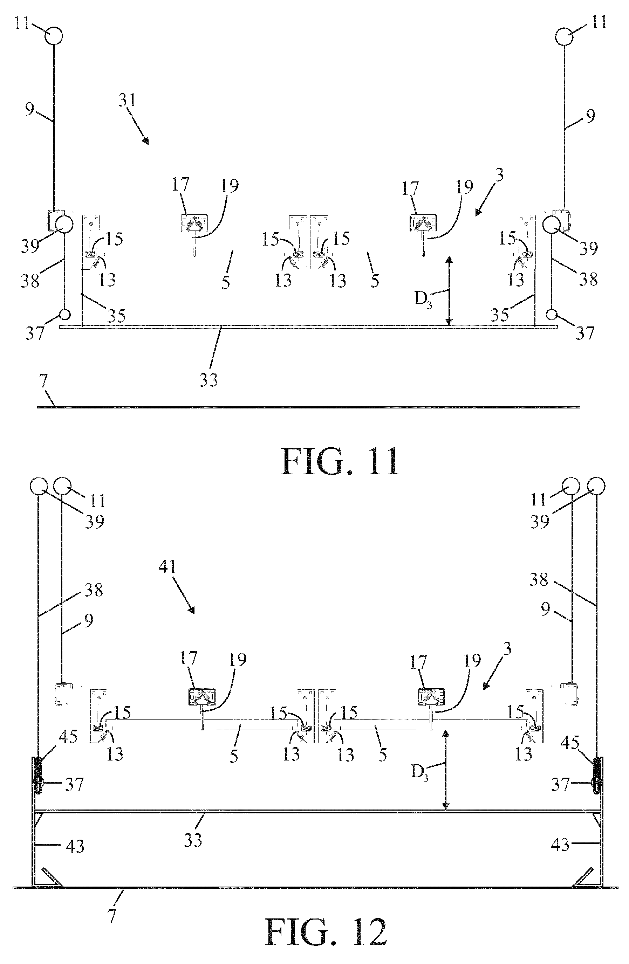

Fig. 11 shows a further embodiment of the incubator device according to the invention. All component parts that are similar to those of the embodiment described above are referred to by like reference numerals. Compared to the embodiment described hereinbefore the incubator device 31 shown in Fig. 11 is provided with an additional receiving plate 33 which is located at a distance D₃ underneath the egg trays 5. The receiving plate 33 is formed by a plastic plate which is suspended near the edges by cables 35 from the egg carrier 3.

The incubator device 31 further includes a height-adjustable railing 37 which is formed by a round tube and is suspended via cables 38 from a hoist system 39. This hoist system is fitted to the egg carrier 3.

Fig. 12 also shows an incubator device 41 provided with a receiving plate 33. However, here the receving plate is not suspended, but carried by a frame 43 present on the poultry house floor 7. The distance D₃ from the receiving plate 33 to the egg trays 5 is adjustable by means of the hoist system 11. Also this incubator device 41 has a height-adjustable railing 37, which again is formed by a round tube which is suspended from a hoist system 39 by means of cables 38. This hoist system is fitted to the ceiling or roof of the poultry house in lieu of to the egg carrier 3. The round tube here is movable in a vertical guide 45 which is attached to the frame 43.

Albeit the invention has been described in the foregoing based on the drawing figures, it should be observed that the invention is not by any manner or means restricted to the embodiment shown in the drawing figures. The invention also extends to all embodiments deviating from the embodiment shown in the drawing figures within the scope defined by the claims.

## Claims

1. A poultry house comprising a poultry house floor, a ceiling and/or roof, and an incubator device (1; 31; 41) for eggs (23) comprising an egg carrier (3) for carrying the eggs during the incubation process, as well as first distance-to-floor setting means for retaining the egg carrier at a distance above the poultry house floor, **characterized in that** the first distance-to-floor setting means comprising a suspension system by which the egg carrier (3) is suspended from a ceiling or roof of the poultry house, which poultry house further comprises first adjusting means by which the egg carrier (3) can be suspended at various adjustable heights above the poultry house floor (7), where in an incubation state the distance (D₁) to the poultry house floor is such that the heat/cold radiation from the poultry house floor does not have adverse effects on the incubation of the eggs and/or development of the chicks, and where in a hatching state the distance (D₂) to the poultry house floor is such that the newly hatched chicks can drop or climb onto the poultry house floor or a receiving plate (33) positioned above the floor without experiencing any bodily harm, where in the incubation state the distance to the poultry house floor is larger than in the hatching state.

2. A poultry house as claimed in claim 1, **characterized in that** the poultry house further includes a receiving plate (33) which is positioned at a distance (D₃) below the egg carrier (3), this distance being such that when the egg carrier is positioned in the hatching state, newly hatched chicks can drop onto the receiving plate without experiencing any bodily harm, as well as second distance-to-floor setting means for retaining the receiving plate (33) at a distance above the poultry house floor (7) or at a distance below the egg carrier (3).

3. A poultry house as claimed in claim 2, **characterized in that** the poultry house comprises a railing (37) or raised edge which is present along the periphery of the receiving plate (33).

4. A poultry house as claimed in claim 3, **characterized in that** the poultry house comprises second adjusting means for adjusting the distance from the railing (37) to the receiving plate (33).

5. A poultry house as claimed in claim 4, **characterized in that** cables (38) are attached to the railing (37) by which the railing can be suspended from the ceiling or roof or from the egg carrier (3), and the second adjusting means comprise a hoist system (39) by which the cables (38) can be pulled up or lowered.

6. A poultry house as claimed in any one of the preceding claims, **characterized in that** the suspension system comprises further cables (9) by which the egg carrier (3) can be suspended from the ceiling or roof and the first adjusting means comprise a further hoist system (11) by which the further cables (9) can be pulled up or lowered for adjusting the desired height of the egg carrier (3) above the poultry house floor (7) and/or for lifting and lowering the egg carrier over a larger distance.

7. A poultry house as claimed in any one of the preceding claims, **characterized in that** the egg carrier (3) is designed for carrying eggs accommodated in egg trays (5) and comprises one or more pairs of parallel mutually equidistant support strips (13), as well as side guide profiles (15) located above and beside these strips, between which profiles the egg trays (5) fit with a slight clearance, where the support strips (13) are located between adjoining rows of eggs in the egg trays underneath the partitions located between the rows.

8. A poultry house as claimed in claim 7,
**characterized**
**in that** the incubator device further includes transport means for further advancing the egg trays (5) in an intermittent manner over the adjusting means each time over a moving distance (X) that exceeds the length of the egg tray.

9. A poultry house as claimed in claim 8, **characterized in that** the transport means comprise a rail (17) having adjustable hooks (19) accommodated therein, which have a mutual distance that equals the moving distance (X), which hooks allow of being turned away in one direction and of being locked against turning in another direction opposite to this.

10. A poultry house as claimed in any one of the preceding claims, **characterized in that** the poultry house comprises heating means and ventilation means, which heating means heat solely the egg trays (5) and their immediate environment.

11. A method of incubating eggs (23) and raising chicks in a poultry house as claimed in claim 10, **characterized in that** one or more egg trays (5) containing eggs are deposited at a first distance (D₁) above the poultry house floor (7) and, subsequently, the eggs (23) are hatched after which the trays are lowered to a second distance (D₂) above the poultry house floor, where the newly hatched chicks can land or climb without any bodily harm onto the poultry house floor or a receiving plate (33) present above this floor, and afther all eggs are hatched the egg trays are risen and the chicks will be raised in the poultry house.

12. A method as claimed in claim 11, **characterized in that** during the incubation process the egg trays (5) are intermittently advanced in horizontal direction and are removed from the poultry house once the eggs (23) have hatched.

## Patentansprüche

1. Erdstall, der mit einem Stallboden, einer Decke und/oder einem Dach und einer Brutanlage (1; 31; 41) für Eier (23) versehen ist und einen Eierträger (3) als Halterung für die Eier während des Brutvorgangs sowie erste Abstandhalter umfasst, mit denen der Eierträger im Abstand über dem Stallboden gehalten wird, **dadurch gekennzeichnet, dass** die ersten Abstandhalter eine Aufhängevorrichtung umfassen, mit denen der Eierträger (3) an der Decke oder dem Dach des Erdstalls aufgehängt werden kann, wobei der Erdstall ferner erste Verstellmittel umfasst, mit denen der Eierträger (3) in verschiedenen einstellbaren Höhen über dem Stallboden (7) fixiert werden kann, wobei der Abstand (D₁) zum Stallboden in einer Brutstellung so bemessen ist, dass Wärme- oder Kältestrahlung des Stallbodens keine negativen Auswirkungen auf den Schlupf und/oder die Entwicklung der Küken hat, und wobei der Abstand (D₂) zum Stallboden in einer Schlupfstellung so bemessen ist, dass die geschlüpften Küken ohne Verletzungen auf den Stallboden oder auf eine über dem Boden vorhandene Auffangplatte (33) fallen oder klettern können, wobei der Abstand zum Stallboden in Brutstellung größer ist als in Schlupfstellung.

2. Erdstall nach Anspruch 1, **dadurch gekennzeichnet, dass** der Erdstall ferner eine Auffangplatte (33) umfasst, die im Abstand (D₃) unter dem Eierträger (3) angeordnet ist, wobei der Abstand so bemessen ist, dass die geschlüpften Küken, wenn sich der Eierträger in Schlupfstellung befindet, ohne Verletzungen auf die Auffangplatte fallen können, sowie zweite Abstandmittel für die Fixierung der Auffangplatte (33) im Abstand über dem Stallboden (7) oder im Abstand unter dem Eierträger (3).

3. Erdstall nach Anspruch 2, **dadurch gekennzeichnet, dass** der Erdstall ein Geländer (37) oder eine Aufkantung umfasst, die um den äußeren Rand der Auffangplatte (33) verläuft.

4. Erdstall nach Anspruch 3, **dadurch gekennzeichnet, dass** der Erdstall zweite Verstellmittel für die Einstellung des Abstands des Geländers (37) zur Auffangplatte (33) umfasst.

5. Erdstall nach Anspruch 4, **dadurch gekennzeichnet, dass** an dem Geländer (37) Seile (38) befestigt sind, mit denen das Geländer an der Decke oder am Dach oder an dem Eierträger (3) aufgehängt werden kann, und die zweiten Verstellmittel eine Windenanlage (39) umfassen, mit denen die Seile (38) ein- und ausgerollt werden können.

6. Erdstall nach einem der vorangegangenen Ansprüche, **dadurch gekennzeichnet, dass** die Aufhängevorrichtung weitere Seile (9) umfasst, mit denen der Eierträger (3) an der Decke oder am Dach aufgehängt werden kann, und die ersten Verstellmittel eine weitere Windenanlage (11) umfassen, mit denen die weiteren Seile (9) für die Einstellung der gewünschten Höhe des Eierträgers (3) über dem Stallboden (7) und/oder die Anhebung und Absenkung des Eierträgers über eine größere Distanz ein- und ausgerollt werden können.

7. Erdstall nach einem der vorangegangenen Ansprüche, **dadurch gekennzeichnet, dass** der Eierträger (3) dafür ausgelegt ist, Eierablagen (5) mit Eiern zu tragen, und ein oder mehrere Paare von parallel im Abstand zueinander angeordnete Stützprofile (13) sowie darüber und daneben angeordnete seitliche Führungsschienen (15) umfasst, zwischen die die Eierablagen (5) mit geringem Spiel passen, wobei die Stützprofile (13) zwischen benachbarten Eierreihen auf den Eierablagen unterhalb von Zwischenwänden (21) angeordnet sind, die sich zwischen den Reihen befinden.

8. Erdstall nach einem der vorangegangenen Ansprüche, **dadurch gekennzeichnet, dass** die Brutanlage ferner Fördermittel umfasst, mit denen sich die Eierablagen (5) periodisch über die Verstellmittel jeweils über einen Arbeitsweg (X) verschieben lassen, der größer als die Länge der Eierablage ist.

9. Erdstall nach Anspruch 8, **dadurch gekennzeichnet, dass** die Fördermittel eine Schiene (17) umfassen, in der verschiebbare Haken (19) in Abständen zueinander angeordnet sind, die dem Arbeitsweg (X) entsprechen, und diese in einer Richtung abschwenkbar und in der entgegengesetzten Richtung gegen Verdrehen gesichert sind.

10. Erdstall nach einem der vorangegangenen Ansprüche, **dadurch gekennzeichnet, dass** der Erdstall Heizmittel und Lüfungsmittel umfasst, wobei mit den Heizmitteln nur die Eierablagen (5) und deren unmittelbare Umgebung beheizt werden.

11. Verfahren für das Ausbrüten von Eiern (23) und die Aufzucht von Küken in einem Erdstall nach Anspruch 11 oder 12, **dadurch gekennzeichnet, dass** ein oder mehrere Eierablagen (5) mit darin vorhandenen Eiern in einem ersten Abstand (D₁) über dem Stallboden (7) in dem Erdstall platziert werden können, wonach die Eier (23) ausgebrütet und anschließend auf einen zweiten Abstand (D₂) über dem Stallboden abgesenkt werden, wobei die Küken ohne Verletzungen auf den Stallboden oder auf eine über dem Boden vorhandene Auffangplatte (33) fallen oder klettern können und, nachdem sämtliche Eier ausgebrütet worden sind, die Eierablagen hochgefahren und die Küken im Stall aufgezogen werden.

12. Verfahren nach Anspruch 11, **dadurch gekennzeichnet, dass** die Eierablagen (5) während der Brut periodisch in waagerechter Richtung verschoben und nach dem Ausbrüten der Eier (23) aus dem Erdstall entnommen werden.

## Revendications

1. Poulailler au sol étant pourvu d'un plancher de poulailler, d'un plafond et/ou d'un toit, et d'un dispositif de couvaison (1; 31; 41) pour des oeufs (23) comprenant un support pour oeufs (3) sur lequel peuvent reposer les oeufs pendant le procédé de couvaison, ainsi que de premiers moyens d'espacement pour maintenir le support pour oeufs à distance au-dessus du plancher de poulailler, **caractérisé en ce que** les premiers moyens d'espacement comprennent un dispositif d'accrochage grâce auquel le support pour oeufs (3) peut être accroché au plafond ou au toit du poulailler au sol, lequel poulailler au sol comprend de plus des premiers moyens de réglage grâce auxquels le support pour oeufs (3) peut être maintenu à différentes hauteurs réglables au-dessus du plancher de poulailler (7) du poulailler au sol, où, dans une position de couvaison, la distance (D₁) jusqu'au plancher de poulailler est telle que le rayonnement thermique (chaud ou froid) du plancher de poulailler n'a aucun effet négatif sur l'éclosion des oeufs et/ou le développement des poussins, et où, dans une position d'éclosion, la distance (D₂) jusqu'au plancher de poulailler est telle que les poussins qui ont éclos sans lésion puissent tomber ou grimper sur le plancher de poulailler ou sur un plateau collecteur (33) étant présent au-dessus de celui-ci, où la distance jusqu'au plancher de poulailler est plus grande en position de couvaison qu'en position d'éclosion.

2. Poulailler au sol selon la revendication 1, **caractérisé en ce que** le poulailler au sol comprend de plus un plateau collecteur (33) se trouvant à distance (D₃) sous le support pour oeufs (3), laquelle distance est telle qu'en présence du support pour oeufs en position d'éclosion, les poussins éclos sans lésion puissent tomber sur le plateau collecteur, ainsi que de seconds moyens d'espacement pour maintenir le plateau collecteur (33) à distance au-dessus du plancher de poulailler (7) ou à distance sous le support pour oeufs (3).

3. Poulailler au sol selon la revendication 2, **caractérisé en ce que** le poulailler au sol comprend une rambarde (37) ou un bord surélevé qui se trouve le long du pourtour du plateau collecteur (33).

4. Poulailler au sol selon la revendication 3, **caractérisé en ce que** le poulailler au sol comprend deux moyens de réglage pour le réglage de la distance de la rambarde (37) jusqu'au plateau collecteur (33).

5. Poulailler au sol selon la revendication 4, **caractérisé en ce que** des câbles (38) sont fixés à la rambarde (37) grâce à quoi la rambarde peut être accrochée au plafond ou au toit ou au support pour oeufs (3), et **en ce que** les deuxièmes moyens de réglage comprennent un système de treuil (39) grâce auquel les câbles (38) peuvent être tirés et relâchés.

6. Poulailler au sol selon une des revendications précédentes, **caractérisé en ce que** le dispositif d'accrochage comprend des câbles supplémentaires (9) grâce auxquels le support pour oeufs (3) peut être accroché au plafond ou au toit, et **en ce que** les premiers moyens de réglage comprennent un système de treuil supplémentaire (11) grâce auquel les câbles supplémentaires (9) peuvent être tirés et relâchés pour le réglage de la hauteur voulue du support pour oeufs (3) au-dessus du plancher de poulailler (7) et/ou pour hisser et abaisser le support pour oeufs sur une plus grande distance.

7. Poulailler au sol selon une des revendications précédentes, **caractérisé en ce que** le support pour oeufs (3) est conçu pour porter des oeufs présents dans des alvéoles à oeufs (5) et comprend une ou plusieurs paires de bandes de soutien (13) étant parallèles et à certaine distance l'une de l'autre, ainsi que des profils conducteurs latéraux (15) étant présents au-dessus et à côté de celles-ci et entre lesquels les alvéoles à oeufs (5) s'emboîtent avec un jeu minime, où les bandes de soutien (13) se trouvent entre des rangées d'oeufs voisines dans les alvéoles à oeufs sous des cloisons (21) se trouvant entre les rangées.

8. Poulailler au sol selon une des revendications précédentes, **caractérisé en ce que** le dispositif de couvaison comprend de plus des moyens de transport pouvant déplacer les alvéoles à oeufs (5) de façon intermittente au-dessus des moyens de réglage à une distance de déplacement (X) à chaque fois plus grande que la longueur de l'alvéole à oeufs.

9. Poulailler au sol selon la revendication 8, **caractérisé en ce que** les moyens de transport comprennent un rail (17) ayant à l'intérieur des crochets mobiles (19) situés entre eux à une distance égale à la distance de déplacement (X), lesquels crochets peuvent être détournés dans une direction et, quand ils sont tournés dans la direction opposée à celle-ci, peuvent être bloqués en rotation.

10. Poulailler au sol selon une des revendications précédentes, **caractérisé en ce que** le poulailler au sol comprend des moyens de chauffage et des moyens de ventilation, lesquels moyens de chauffage chauffent seulement les alvéoles à oeufs (5) ainsi que l'entourage proche de celles-ci.

11. Procédé pour la couvaison d'oeufs (23) et l'élevage de poussins dans un poulailler au sol selon la revendication 11 ou 12, **caractérisé en ce qu'**une ou plusieurs alvéoles à oeufs (5) contenant des oeufs sont placées à une première distance (D₁) au-dessus du plancher de poulailler (7) dans le poulailler au sol et ensuite les oeufs (23) sont couvés et puis sont ensuite abaissés à une deuxième distance (D₂) au-dessus du plancher de poulailler, où les poussins sans lésion peuvent tomber ou grimper sur le plancher de poulailler ou sur un plateau collecteur (33) étant présent au-dessus de celui-ci, et après que tous les oeufs ont été couvés, les alvéoles à oeufs sont soulevées et les poussins sont élevés dans le poulailler.

12. Procédé selon la revendication 11, **caractérisé en ce que** pendant la couvaison, les alvéoles à oeufs (5) sont déplacées de façon intermittente en direction horizontale et, après la couvaison des oeufs (23), sont enlevées du poulailler au sol.
